# EUROPEAN PATENT APPLICATION

(11) **EP 1 132 786 A2**
(43) Date of publication of application: **12.09.2001**
(21) Application number: 01400579.7
(22) Date of filing: 06.03.2001
(51) Int. Cl.: G03H 1/02, B41M 3/14

(54) **Holographic element and process for transferring a plurality of holographic images from a polymeric support to a paper or tissue support**

(30) Priority: 06.03.2000 US 187083 P; 07.03.2000 US 187495 P
(71) Applicant: ILLINOIS TOOL WORKS INC., Glenview, Cook County, Illinois 60025 (US)
(72) Inventor: Stepanek, Michael J., Hollis, New Hamshire 03049 (US)
(74) Representative: Bloch, Gérard

(57) **Abstract**

A paper or tissue support (31) has an adhesive layer and a metallized holographic image, wherein the metallized holographic image includes at least two holograms (32, 33), such that the first hologram (32) is visible only by non-coherent light and the second hologram (33) is visible only by coherent light. The holographic images are formed on a photosensitive element on a polymeric support by imaging steps, which include metallizing (33) the holographic images and overcoating the holographic images with an adhesive layer. Next, the metallized holographic images (33) are transferred to the paper or tissue (31) by laminating the adhesive layer to the paper or tissue (31) at a predetermined temperature and pressure, and subsequently delaminating the polymeric support from the paper or tissue (31), such that the holographic image remains on the polymer support for reuse.

The invention is appropriate for providing security wrapping papers.

## Description

### BACKGROUND OF THE INVENTION

### 1. Field of the Invention:

This invention relates to special holographic images that are formed so as to provide security when viewed under special conditions and more specifically to a process for making multiple transference of these images on to paper or tissue.

### 2. Description of the Prior Art

Holographically enhanced materials are well known in the prior art and they have been fully described in US Patents n° 5 662 986, 5 766 734, 5 735 989 and 5 900 095. These materials include a number that have been used to enhance products with which they are associated such as wrapping papers, papers, cardboard boxes and the like. Also, holographically enhanced images can be used on credit cards and the like in order to provide security since the image is difficult to reproduce. Preparation of the holographic image is a well-known process but has not been widely used until the discovery of the unique processes for multiple transference of a metallized image onto alternative supports. A special novel support is a paper or tissue support, which heretofore could not be enhanced with a holographic image, because the support was too fragile. This element and process is well described in the aforementioned related patents above. The preparation of holographic materials is also described fully, among other references, in the Holography Handbook, Unterseher et al., 2^{nd} Edition (1996), Ross Books, Berkeley, CA.

Typical security holographic materials are exemplified in U. S. Patent No. 3,894,756. Here a coded hologram is placed within an element such as a security ID card, for example. In order to unscramble the coded hologram a complicated beam-unscrambling device must be employed. When the beam is shown on to the coded hologram the image is formed and can be viewed. Another security system is described in U. S. Patent No. 4,140,373. In this reference overlapping holograms are applied to the desired layer, one of said overlapping hologram being visible only by coherent light (e.g. laser light). When this coherent light is applied, the so-called invisible hologram can be seen. U. S. Patent No. 4,400,616 describes yet another security system in which an identification card can be made, for example, by laminating one or more planar transparent wave-guide holograms to a support. By placing a grating over the resulting product, said grating being receptive to a particular wavelength, the desired image can be illuminated. Another reference, which describes a system and method for identifying a coded hologram, is U. S. Patent No. 5,825,475. In this particular invention, a hologram is recorded on a substrate using a particular wavelength of light. By illuminating the hologram with that particular wavelength of light, the image can be viewed.

As can be seen from perusing these many prior art references, the making, manufacturing and selling of products that contain so-called hidden holograms is a complicated process involving a large number of steps and complicated equipment and viewing apparatus. Each element must be manufactured separately and thus it is a costly process.

Recently a newer and improved system for manufacturing the so-called hidden holograms has been found. In this system, a photosensitive resist layer is used. Part of the photosensitive layer is masked and a first hologram (white light - non-coherent - viewable) imaged on the un-masked area. The mask is then removed and another hologram (laser light - coherent - viewable) imaged on the unexposed area. Since there are now two holograms applied to this layer, one cannot be viewed directly by standard illumination methods and must be illuminated by reflecting coherent light (e.g. a laser) at a 90° angle on to a viewing surface (e.g. a white reflective surface such as white paper, for example). Although this unique and useful system can produce security-type hidden holograms there are no methods for commercialization of the process so that it can be used extensively throughout the commercial industry.

### SUMMARY OF THE INVENTION

There is a pressing need to make, manufacture and sell materials, which contain hidden holograms in order to prevent fraud. For example, counterfeit elements such as tobacco and other products are currently being sold throughout the world costing manufacturers and distributors considerable losses. If there were a simple and easy method for imparting a hidden hologram within the paper or tissue products used to contain and wrap these products, among many others, it would be a simple matter to trace down the counterfeiters. Thus, it is an object of this invention to impart hidden holograms in a cost-effective manner repetitively on to wrapping papers or tissues.

These and yet other objects are achieved in a holographic element according to claim 1.

The support may be a paper support or a tissue support. In the process of this invention, a photosensitive polymeric support is prepared and at least two holographic images are placed thereon. The first holographic image is placed on the photosensitive polymeric support in a conventional manner, after masking over a portion of the photosensitive layer contained thereon. After removal of the photomask, a second holographic image is imparted in the unexposed areas of the photosensitive layer. Both holographic images are then metallized and subsequently transferred to a paper or tissue support, the holographic images having first been over-coated with an adhesive layer. Specific temperatures and pressures are required to transfer only the metallized portions of the holographic images, leaving the holographic images remaining on the polymeric support, after delamination. The holographic images may then be remetallized for reuse.

### BRIEF DESCRIPTION OF THE DRAWINGS

FIG. 1 is a top view of one of the flat surfaces of the paper or tissue support of this invention prior to laminating a metallized holographic image thereon ;
FIG. 2 is a side view of the paper support of FIG. 1 super-imposed over a polymeric support containing the metallized holographic image and prior to being laminated to said paper or tissue support ;
FIG. 3 is a side view of the support from FIGs. 1 and 2 after the metallized holographic image has been transferred from the polymeric support to the paper or tissue support, the holographic image itself being shown remaining on the polymeric support ;
FIG. 4 is a drawing of the schematic process for the lamination of the metallized holographic image to the paper or tissue support ;
FIG. 5 is a drawing of the schematic process for the delamination of the polymeric substrate from the paper or tissue support to produce the metallized holographic image of FIG. 3 as shown ;
FIG. 6 is a drawing of an element wrapped by the paper or tissue support containing the holographic image ;
FIG. 7 shows a process by which coherent light may be shown onto the holographic images contained on the paper or tissue support from FIG. 5 illuminating the hidden holographic image reflected onto a white substrate at a ninety-degree angle thereto.

### DETAILS OF THE INVENTION

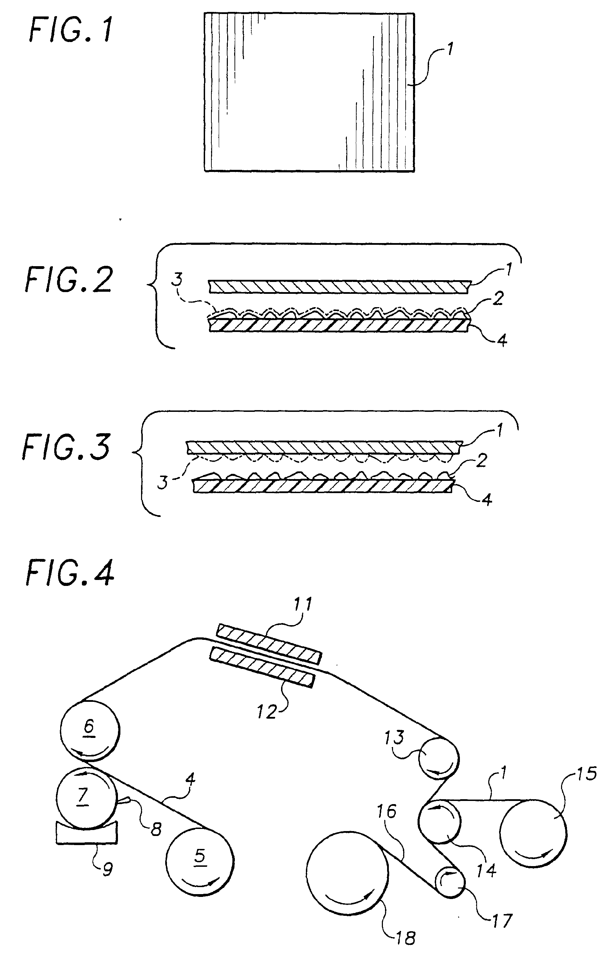

Referring now specifically to the drawings, which show some preferred modes of the element and process of this invention, FIG. 1 is a top view of one of the flat surfaces of the paper or tissue support of this invention shown as 1. Looking now at FIG. 2,1 is again the paper or tissue support shown from the side and this element is juxtaposed against a polymeric support 4, which contains a series of holographic images 2 thereon. The holographic images have been metallized, which are shown as fine particles of metal 3. Moving on to FIG. 3, this view shows that a metallized image 3 has been transferred to the support 1 leaving the holographic image remaining on the polymeric support. This image can then be re-metallized and that metallized image transferred again to yet another paper or tissue support.

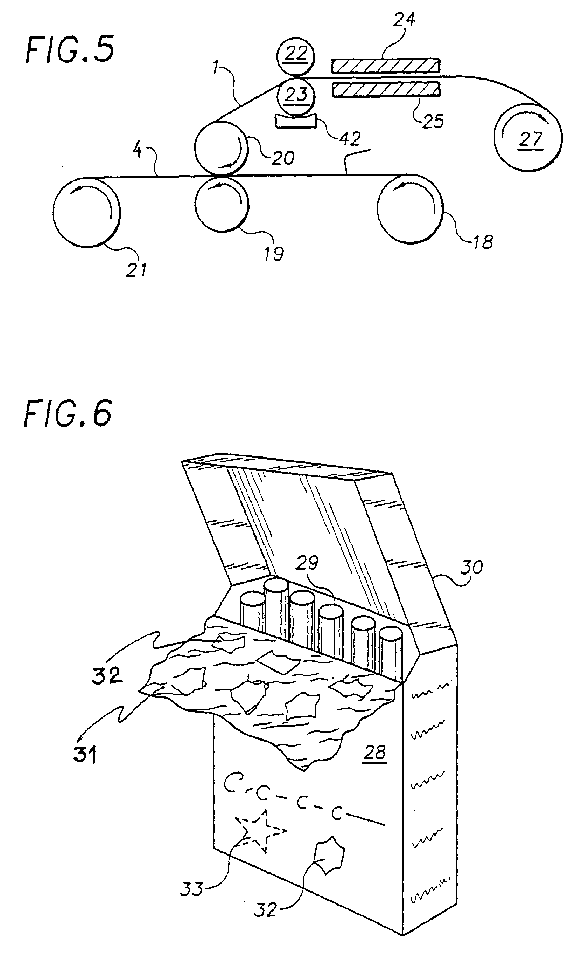

FIG. 4 is a schematic showing of the process for the lamination of the metallized holographic image to the paper or tissue support. This, together with FIG. 5, represents the novel process of this invention. In FIG. 4, a polymeric support 4 containing metallized holographic images thereon (not shown here) is shown being pulled off an unwind roll 5 in a nip formed by opposing rollers 6 and 7. In this view, roll 7 is a standard gravure-coating roll, for example, and roll 6 is a typical backup roll. A reverse gravure doctor blade (to control coating weight) is shown as 8 and a coating pan (holding a standard adhesive solution) is shown as 9. The holographic images thus over-coated with an adhesive layer is then carried through a drier which is shown as 11 and 12 and subsequently down to heated rolls 13 and 14. In the nip formed by these last two rolls, a paper or tissue support 1 is taken from a roll 15 and this paper or tissue support contacts the dried surface of the adhesive layer of the polymeric support containing metallized holographic images thereunder. This step laminates the two supports (polymer 4 and paper or tissue 1) into a sandwich 16 which is passed over a chill roll 17 and then taken up on to a rewind roll 18.

The process of delamination is shown in FIG. 5. In this schematic drawing the laminated sandwich material 16 from FIG. 4 is drawn off unwind roll 18 and taken through the nip of two delamination rolls 19 and 20. The polymeric substrate 4 is taken up on a film rewind roll 21 (this material still contains holographic images thereon and may be remetallized and reused again). The paper or tissue support 1 now carrying the metallized holographic images (not shown in this figure) is taken up to coating heads 22 and 23. A protective coating may then be applied over the metallized, holographic images using this step. The protective coating may be applied at the nip of the coating heads 22 and 23 from a pan 42. The overcoated image may then be passed through dryers 24 and 25 and the hardened, protected holographic images on the paper or tissue support then wound up on roll 27. This roll of holographically imaged paper or tissue is now ready for use as a security wrap for a host of other materials.

A typical use for the paper or tissue containing holographic images as produced by this invention is shown in FIG. 6. In this case this is a cigarette pack the inside portion of which contains a typical paper or tissue support having the novel holographic image contained thereon . Two holographic images are imparted therein. One is visible, since it is under non-coherent (e.g. room) light. The second holographic image cannot be seen within this figure. In this particular figure 6, 28 is a typical cigarette box containing a plurality of cigarettes shown as 29, for example. The lid of the cigarette box 30 is shown open displaying the cigarettes contained therein. A paper or tissue 31, which may be wrapped around the cigarettes during manufacture, contains a plurality of holographic images **32,** which can be viewed under white, visible light naturally. Hidden holographic images, also put on this paper support, are not visible under white light but may be viewed under coherent light (e.g. laser light). Thus, cigarettes made by the manufacturer may contain these hidden holographic images that may prevent counterfeiting thereof.

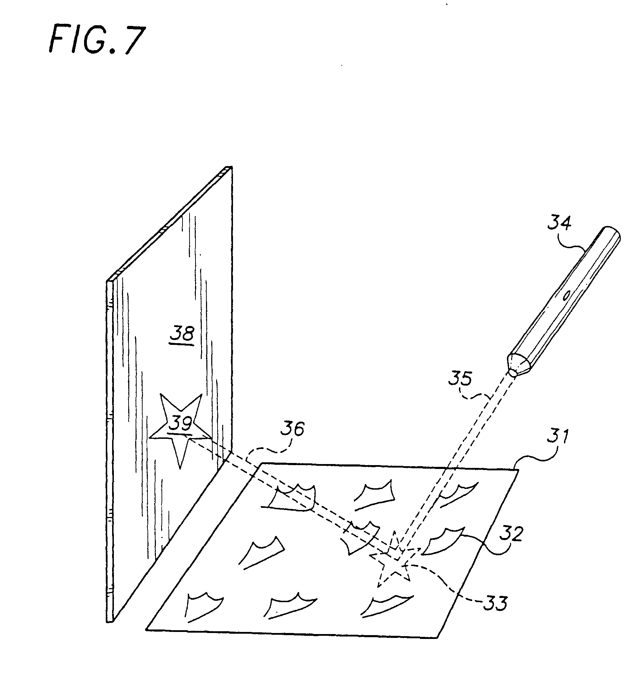

To observe the holograph contained hidden on the paper or tissue support of this invention, one needs to look at FIG. 7. In this figure, a paper or tissue support containing holographic images thereon is shown as 31 with the white light visible holographic images shown as 32. A hidden holographic image is shown with dashed lines as a star 33. A laser light from a hand held source 34 impinges its rays 35 on the hidden holographic image 33 and this light is reflected by rays 36 on to a white board or cardboard 38. The hidden holographic image can then be viewed as a full star 39 reflected onto this board.

The process of transferring the holographic images from the polymeric support to the paper or tissue support is carried out at temperatures of between 0°C and 150°C and a pressure of greater than 6894 Pa (1 pound per square inch) preferably at temperatures between 30 to 125°C and elevated pressures of between 34 to 68kPa applied between the nip of rolls 6 and 7 shown in FIG. 4. The temperature should not be above 150°C in order not to harm the holographic images contained on the polymeric roll. Thus, conditions in the driers should not exceed this temperature. Simply designing the length of the driers and the web speed of the element passing through these driers can control these temperatures. The purpose of the chill roll 17 is to set up the adhesive and insure that the paper or tissue support and the holographic images on the polymeric support 4 are secure. The adhesive material is well-known in the coating art and can be applied at a coating weight of between 0,227 to 6,35 kg (dry) per ream of paper, or 0,227 to 3,63 kg (dry) per ream of tissue, wherein a ream is thought to be about 500 sheets of paper or tissue of 0,6 by 9,1 m in size. The metallized holographic images can be transferred to either side of the paper or tissue support 1. The adhesive layer is applied over the metallized holographic images first. Then the paper or tissue support 1 contacts this layer at the head nip rolls and is adhered thereto.

When the two supports (polymeric 4 and paper or tissue 1) are delaminated following the process shown in FIG. 5, the metallized holographic images are transferred from the polymeric support 4 to the paper or tissue support 1. This step is accomplished by peeling apart the two supports. Since the adhesive layer will adhere more strongly to the paper or tissue support, it will pull along the metallized holographic images. These may then be over coated with a suitable protective layer , in fact it is so preferred. This protective layer may comprise an of a host of conventional materials such as solvent or water based acrylics, for example, and this layer may or may not be tinted if desired.

Paper or tissue support elements are also legion in number. For example, if one wishes to have a plurality of holographic images (some viewed only for security purposes) on wrapping paper or tissue, useful in a host of wrapping procedures, one should use that which is said to have 9 to 34 kg per ream of paper or 2,25 to 10,8 kg per ream of tissue. This paper or tissue is particularly useful since it has such a low weight and thus can be used to wrap up any number of elements such as cigarettes and the like. Since some of the holographic images are hidden from normal view (e.g. under non-coherent white light, for example) these materials are very useful for security purposes since the so-called hidden holographic images can be viewed under coherent (e.g. laser) light and thus counterfeiting may be prevented. The papers containing the holographic images as described within this invention can be used in a host of applications including the wrapping of gifts; store wrappings; decorative wrappings; wrapping of food products for advertising and the like. The ability to have a secure, holographic image imparted thereon means the paper or tissue can be use exclusively for a certain application and thus has an improved quality of use.

Holographic images may be imparted onto a plurality of photosensitive layers such as silver halide, photoresists and the like, as is well-known to those skilled in the art and as is described in the prior art listed within this specification. These photosensitive layers can be applied on a plurality of polymeric supports including polyethylenes, polypropylenes, and polyethylene terephtalates among others. These substrates are usually 0,76 to 100 µm in thickness.

The ability to dry-bond laminate and then to delaminate the elements described in this specification, containing a plurality of metallized holographic images represents a unique process since it was not known before the invention that such holographic images could be so transferred. The process as described herein uses some unique equipment that is designed to hold, laminate and then delaminate some fairly flimsy material. It is necessary to insure that all of the elements of the process are carefully maintained within the processing limits. The use of the elements produced within the scope of this invention greatly increases the utility of holographic images to be commercially useful.

A preferred polymeric support is T-BOSS, which is available from Applied Extrusion Technologies, Inc. of Peabody, Massachusetts.

## Claims

1. A holographic element comprising a support (1) having two flat surfaces, one of said surfaces having in order :
a) an adhesive layer and
b) a metallized holographic image (3),
wherein said metallized holographic image (3) comprises at least two holograms (32, 33) therein, one (32) of said holograms being visible only by non-coherent light and the other (33) of said holograms being visible only by coherent light and wherein said metallized holographic image is obtained from a plurality of holographic images formed on a photosensitive element coated on a polymeric support (4) by at least two imaging steps and wherein said holographic images are then metallized (3) and overcoated with an adhesive layer and whereby said metallized holographic images are subsequently transferred to said support (1) from said polymeric support (4) by laminating the adhesive layer coated over said metallized holographic image (3) to said support (1) at a temperature between 0°C and 150°C and a pressure greater than 6894 Pa (1 pound per square inch) and subsequently delaminating said polymeric support (4) from said paper support (1) substantially transferring all of the metallized portion of the holographic image (3) to said support (1) and leaving the holographic images on the polymeric support (4) suitable for reuse.

2. The holographic element of claim 1 wherein two holographic images are contained on said support (1) and one (33) of said holographic images can be viewed by coherent laser light (35) reflected thereon (36).

3. The holographic element of claim 1 wherein said temperature of transfer is between 60°C and 90°C and said pressure is greater than 6894 Pa.

4. The holographic element of claim 2, wherein one of said holographic images can be viewed by laser light (36) reflected from said image (33) on to a white surface (38) held at right angles to said image (33).

5. The holographic element of claim 1 wherein said support (1) is used as a wrapping element (31) and said holographic images are employed as security elements.

6. The holographic element of claim 1 wherein a protective layer is coated over the metallized holographic layer (3) contained on said support (1).

7. The holographic element of one of claims 1 to 6, wherein said support (1) is a paper support.

8. The holographic element of claim 7, wherein said paper support has a weight of between 9 to 34 kg per ream, wherein said ream is defined as 500 sheets of paper of 0,6 by 9,1 m in size.

9. The holographic element of one of claims 1 to 6, wherein said support (1) is a tissue support.

10. The holographic element of claim 9, wherein said tissue support has a weight of between 2,25 to 10,8 kg per ream, wherein said ream is defined as 500 sheets of tissue of 0,6 by 9,1m in size.

11. A process for transferring a plurality of holographic images from a polymeric support (4) to a support (1), comprising the steps of :
a. coating a photosensitive layer on a polymeric support (4);
b. masking part of said photosensitive layer ;
c. forming a first holographic image (32) viewable by non-coherent light on the un-masked part of said photosensitive layer ;
d. removing said mask ;
e. forming a second holographic image (33) viewable by coherent light onto that area of the photosensitive layer that has been covered by said mask ;
f. metallizing (3) a portion of said holographic images ;
g. coating an adhesive layer on top of said metallized holographic images (3) ;
h. contacting said adhesive layer to a support (1) at a temperature of between 0°C and 150°C and a pressure greater than 6894 Pa (1 pound per square inch) to form a sandwich (16) comprising the support (1), the adhesive layer, the metallized holographic layer (3) and the polymeric support (4) and
i. delaminating said sandwich (16) whereby said metallized portion (3) of said holographic images is transferred to said support (1) and said holographic images remain on said polymeric support (4) suitable forreuse.

12. The process of claim 11 wherein a protective layer is applied over said metallized holographic images (3) on said support (1).

13. The process of one of claims 11 and 12, wherein said support is a paper support.

14. The process of one of claims 11 and 12, wherein said support is a tissue support.
